# EUROPÄISCHE PATENTSCHRIFT

(11) **EP 1 536 979 B1**
(45) Veröffentlichungstag und Bekanntmachung des Hinweises auf die Patenterteilung: **22.11.2006**
(21) Anmeldenummer: 03794942.7
(22) Anmeldetag: 26.08.2003
(51) Int. Cl.: B60R 1/12, B60Q 1/26

(54) **Außenrückspiegel für Fahrzeuge mit einer Signalleuchte**
Outside rear-view mirror for vehicles, comprising a signal light
Rétroviseur extérieur pour vehicules , muni d'un témoin lumineux

(30) Priorität: 29.08.2002 DE 10239839
(43) Veröffentlichungstag der Anmeldung: 08.06.2005
(73) Patentinhaber: Volkswagen Aktiengesellschaft, 38436 Wolfsburg (DE)
(72) Erfinder: BAGANZ, Christina, 38440 Wolfsburg (DE)
(74) Vertreter: Reitstötter - Kinzebach
(86) Internationale Anmeldenummer: PCT/EP2003/009450
(87) Internationale Veröffentlichungsnummer: WO 2004/024505

(56) Entgegenhaltungen:
- DE-A- 3 635 473
- DE-A- 19 959 609
- DE-B- 1 241 295

## Beschreibung

Die vorliegende Erfindung betrifft einen Außenrückspiegel für Fahrzeuge, insbesondere Kraftfahrzeuge, mit einem Gehäuse, das einen Rückspiegel und eine Signalleuchte aufnimmt. Die Signalleuchte weist eine oder mehrere Lichtquellen und zumindest eine Reflektorfläche auf.

Es sind Außenrückspiegel bekannt, in denen Blinkleuchten integriert sind. Als Lichtquelle für die Blinkleuchte dient eine lichtemittierende Diode (LED), deren Lichtemission in einen Lichtleiter eingekoppelt wird. Die Lichtauskopplung erfolgt bei Profilierungen des Lichtleiters, entweder bezüglich der Fahrtrichtung nach vorne oder nach hinten. Vielfach erstreckt sich der Lichtleiter horizontal von der dem Fahrzeug zugewandten Seite des Rückspiegels nach außen über die gesamte Breite des Außenrückspiegels. Die DE 29819 279 U1, die EP 0 858 932 A2 und die EP 1 195 296 A2 beschreiben beispielsweise solche Außenrückspiegel mit Seitenblinkleuchten mit Lichtleitern. Nachteilhaft an solchen Außenrückspiegeln mit Blinkleuchten ist, dass durch die Lichtleitertechnik die Kosten und der Montageaufwand des Außenrückspiegels erhöht werden.

Des weiteren sind aus der DE 100 58 660 A1 und der DE 100 58 659 A1 Leuchten für Kraftfahrzeuge bekannt, bei denen Leuchtdioden auf einem Leiterbahnträger angeordnet sind, der biegsam oder folienförmig ausgebildet ist. Eine solche Leuchte kann u.a. als Signalleuchte in einem Außenspiegelgehäuse untergebracht werden. Das von den Leuchtdioden emittierte Licht tritt in diesem Fall direkt durch eine Lichtscheibe nach außen. Ferner wird es von einem die Leuchtdioden umgebenden Reflektor nach außen reflektiert. Nachteilhaft an solchen Signalleuchten ist, dass die Lichtquellen sichtbar sind, so dass das Leuchtfeld der Signalleuchte nicht einheitlich ausgeleuchtet wird. Ferner beeinflusst die Sichtbarkeit der Lichtquelle das Design eines Außenrückspiegels nachteilhaft.

Schließlich beschreibt die DE 1 241 295 eine Kombination eines Außenrückblickspiegels und einer Signalleuchte, bei welcher das Gehäuse am vorderen Gehäuseende eine hervorstehende Gehäusekappe mit einer weitläufigen Aushöhlung zur Aufnahme einer Lampe, welche durch die lichtdurchlässige Leuchtenkappe direkt, sowohl in Fahrtrichtung, als auch seitlich, strahlen kann.

Ferner ist aus der DE 36 35 473 A1 ein Fahrzeugaußenspiegel mit einer Einparkleuchte bekannt, wobei der von der eingeschalteten Einparkleuchte ausgehende Lichtstrahl schräg nach hinten unten auf den seitlichen Außenbereich des Hinterrades gerichtet ist. Vor der Leuchte sind verhältnismäßig lange, eng beieinander stehende Lamellen vorgesehen, so dass in einer gewissen Entfernung von der Einparkleuchte ein Verkehrsteilnehmer weder von dem austretenden Lichtstrahl noch von der Lampe geblendet wird.

Ferner ist aus der DE 200 11 341 U1 eine Leuchtenbaugruppe für den Einbau in einem Kraftfahrzeugaußenspiegel bekannt, die eine Seitenblinkleuchte und eine Vorfeldleuchte umfasst, die eine gemeinsame Baueinheit bilden.

Es ist die Aufgabe der vorliegenden Erfindung, einen Außenrückspiegel der eingangs genannten Art bereit zu stellen, bei dem die Signalleuchte kostengünstig integriert werden kann, ein möglichst breites und homogenes Leuchtfeld erzeugt wird und gleichzeitig wenig Bauraum von der Signalleuchte in dem Außenrückspiegel in Anspruch genommen wird.

Diese Aufgabe wird erfindungsgemäß von einem Außenrückspiegel mit den Merkmalen des Anspruchs 1 gelöst. Vorteilhafte Aus- und Weiterbildungen ergeben sich aus den Unteransprüchen.

Bei dem erfindungsgemäßen Außenrückspiegel ist die Lichtquelle oder sind die Lichtquellen in dem Gehäuse so angeordnet, dass sie im wesentlichen von außen nicht direkt sichtbar ist bzw. sind, sondern nur über die Reflektorfläche, die Lichtquelle oder die Lichtquellen ist bzw. sind zur Reflektorfläche so angeordnet, dass das von der bzw. den Lichtquelle(n) emittierte Licht direkt auf die Reflektorfläche trifft, und die Reflektorfläche ist in einer Innenblende ausgebildet, wobei die Innenblende eine Aussparung zum Durchtritt des von der Lichtquelle oder den Lichtquellen emittierten Lichts aufweist.

Durch die verdeckte Anordnung der Lichtquellen wird bei dem erfindungsgemäßen Außenrückspiegel einerseits das Design durch die Lichtquellen nicht negativ beeinflusst. Andererseits kann ein homogenes breites Leuchtfeld erzeugt werden, da Licht nur über die Reflektorfläche nach außen tritt, an der Optikelemente integriert sein können, welche die Lichtemission homogenisieren. Dadurch, dass das von den Lichtquellen emittierte Licht direkt auf den Reflektor trifft, können lichtleitende Elemente vermieden werden, welche das Licht der Lichtquellen zu Lichtaustrittselementen leitet. Hierdurch können die Kosten für den erfindungsgemäßen Außenrückspiegel verringert werden.

Gemäß einer Ausgestaltung des erfindungsgemäßen Außenrückspiegels strahlt die Signalleuchte Licht bezüglich der Fahrtrichtung nach vorne. In diesem Fall kann bei der der Spiegelfläche abgewandten Seite des Rückspiegels eine große Fläche für den Lichtaustritt der Signalleuchte zur Verfügung stehen. Hier kann die breite und homogene Abstrahlung über den Reflektor erfolgen.

Bei vielen herkömmlichen Außenrückspiegelgehausen verjüngen sich die Randbereiche des Gehäuses nach außen. Diese Verjüngung betrifft zumeist den oberen und unteren sowie den äußeren Randbereich des Gehäuses. Wird die Signalleuchte in diesen Randbereichen untergebracht, werden die Lichtquellen für die Signalleuchte bevorzugt innen angeordnet. Gemäß einem bevorzugten Ausführungsbeispiel des erfindungsgemäßen Außenrückspiegels verjüngt sich die Bauraumtiefe des Gehäuses zumindest zum unteren Randbereich hin und die Signalleuchte ist in diesem unteren Randbereich des Gehäuses untergebracht. In diesem Fall sind die Lichtquellen oben in der Signalleuchte angeordnet und dort gegenüber direkter Sicht von außen von inneren oder äußeren Ge-häuseteilen verdeckt. Unter Gehäuseteilen werden hier die äußeren Begrenzungsteile des Außenrückspiegels verstanden. Diese umfassen einerseits Teile des Rückspiegelgehäuses und andererseits die Lichtscheibe der Signalleuchte. Des weiteren können die Lichtquellen auch von einer Innenblende gegenüber direkter Sicht von außen verdeckt sein.

Die Reflektorfläche kann vorzugsweise sägezahnförmig ausgebildet sein. Hierdurch kann eine besonders homogene Lichtemission erzeugt werden, welche als sogenannte Kissenoptik erscheint.

Die Lichtquelle oder die Lichtquellen der Signalleuchte ist bzw. sind vorzugsweise eine oder mehrere lichtemittierende Dioden (LED). Vorteilhaft an der Verwendung von lichtemittierenden Dioden ist, dass diese wenig Bauraum benötigen und eine besonders hohe Lebensdauer besitzen. Die lichtemittierenden Dioden können insbesondere in Reihe angeordnet sein.

Die Signalleuchte des erfindungsgemäßen Außenrückspiegels kann insbesondere ein Fahrtrichtungsanzeiger bzw. eine Blinkleuchte sein.

Die Erfindung wird nun anhand eines Ausführungsbeispiels mit Bezug zu den Zeichnungen erläutert.

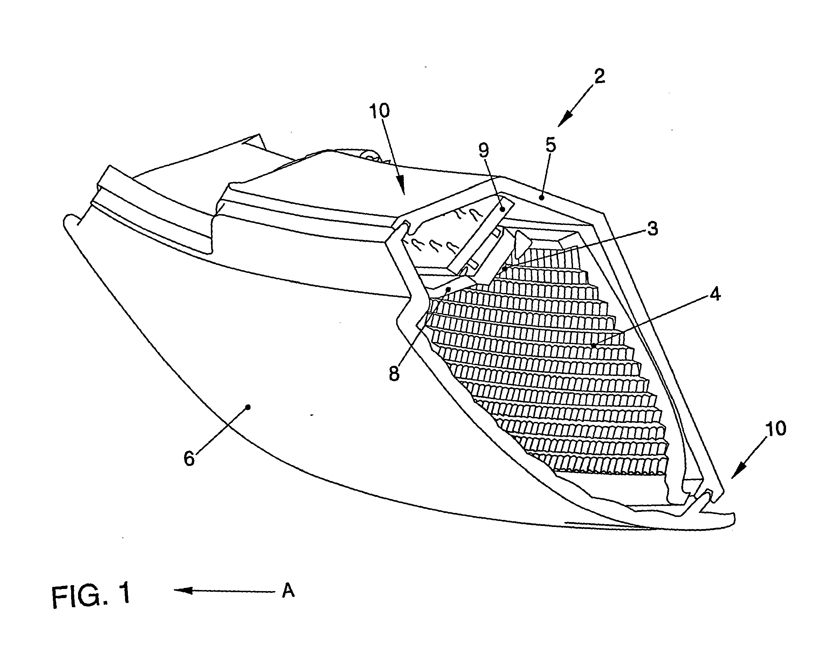

- Figur 1: zeigt eine perspektivische Ansicht der Signalleuchte 2, welche in den Außenrückspiegel 1 eingebaut wird,
- Figur 2: zeigt die in Figur 1 gezeigte Signalleuchte 2 in einer Querschnittsansicht und
- Figur 3: zeigt eine Ansicht des Ausführungsbeispiels des Außenrückspiegels 1 von vome.

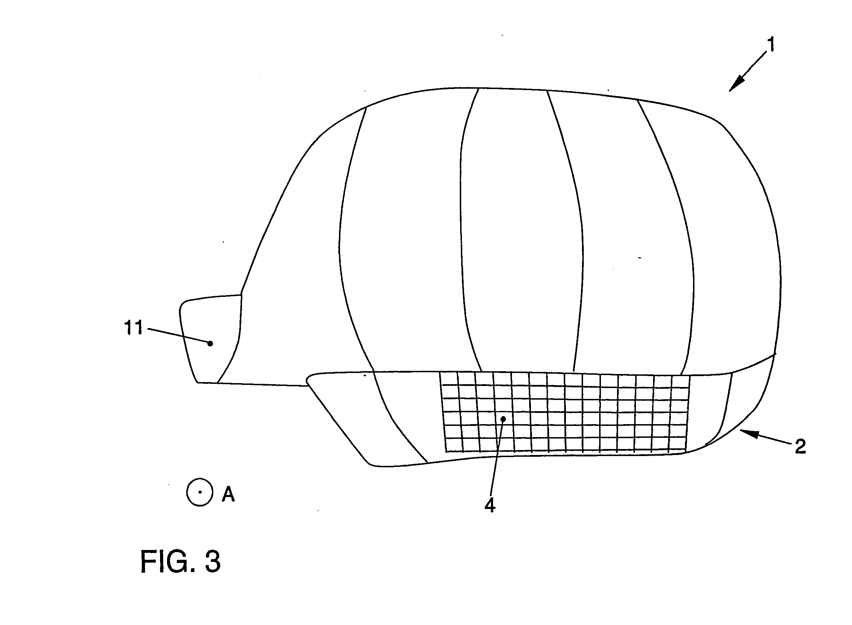

Der Außenrückspiegel 1 weist eine an sich bekannte Bauart auf. Ein Spiegelkopf mit einem Spiegelglasträger für den Rückspiegel wird über einen Spiegelfuß 11 mit dem Fahrzeug verbunden. Der Spiegelkopf kann so an dem Spiegelfuß 11 befestigt sein, dass er an das Fahrzeug herangeklappt werden kann. Der Spiegel kann in dem Spiegelglasträger so aufgenommen sein, dass er um eine horizontale und eine vertikale Achse manuell oder elektrisch geschwenkt werden kann. Auf der bezüglich der Fahrtrichtung A nach vorne gerichteten Seite des Außenrückspiegels 1 ist diese abgerundet, so dass sich der Außenrückspiegel 1 zu den Randbereichen hin verjüngt. Bei dem in Figur 3 gezeigten Ausführungsbeispiel ist die Signalleuchte 2 im unteren Randbereich des Außenrückspiegels untergebracht. Gleichermaßen könnte sie jedoch auch im oberen Randbereich oder im äußeren Randbereich untergebracht sein.

Die Signalleuchte 2 wird einerseits von inneren Gehäuseteilen 5 begrenzt, welche sie zu Einrichtungen des Spiegels abgrenzen. Andererseits wird die Signalleuchte 2 von einer Lichtscheibe 6 nach außen hin abgegrenzt. Die Lichtscheibe 6 wird in an sich bekannter Weise durch Befestigungsmittel 10 an inneren oder äußeren Gehäuseteilen 5 befestigt.

Im Inneren der Signalleuchte sind mehrere lichtemittierende Dioden 3 untergebracht. Bei dem gezeigten Ausführungsbeispiel weist die Signalleuchte 2 sechs in Reihe angeordnete lichtemittierende Dioden 3 auf. Die lichtemittierenden Dioden 3 sind auf eine Platine 9 gelötet. Das von außen sichtbare Innere der Signalleuchte 2 wird im wesentlichen von einer Innenblende 8 ausgefüllt, in der eine Reflektorfläche 4 ausgebildet ist. Die Innenblende 8 und die Reflektorfläche 4 sind somit ein zusammenhängendes Bauteil. Die Reflektorfläche 4 ist im Querschnitt sägezahnförmig. Gleichermaßen könne jedoch auch andere geometrische Formen für die Reflektorfläche 4 verwendet werden.

Die Innenblende 8 weist eine Aussparung bzw. Öffnung auf, durch welche das von den lichtemittierenden Dioden 3 emittierte Licht zu der Reflektorfläche 4 gelangen kann. In dem Ausführungsbeispiel sind die lichtemittierenden Dioden 3 oberhalb der Reflektorfläche 4 angeordnet. Des weiteren sind die Dioden 3 schräg zur Reflektorfläche 4 hinweisend befestigt.

Die Anordnung der Dioden 3 erfolgt derart, dass sie im wesentlichen von außen nicht direkt sichtbar sind. Betrachtet man den Außenrückspiegel 1 aus gleicher Höhe von vorne, sind die lichtemittierenden Dioden 3 nicht direkt sichtbar, sondern nur über die Reflektorfläche 4. Da jedoch auf der Reflektorfläche 4 optische Elemente vorgesehen sind, ist es nicht möglich die lichtemittierenden Dioden 3 als solche zu erkennen. Eine direkte Sicht auf die lichtemittierenden Dioden erhielte man nur, wenn man den Außenspiegel 1 von unten betrachtet. Eine derartige Ansicht des Außenrückspiegels 1 ist jedoch normalerweise nicht möglich, wenn der Außenspiegel 1 an dem Kraftfahrzeug befestigt ist. Aus diesem Grund sind die lichtemittierenden Dioden im wesentlichen von außen nicht direkt sichtbar.

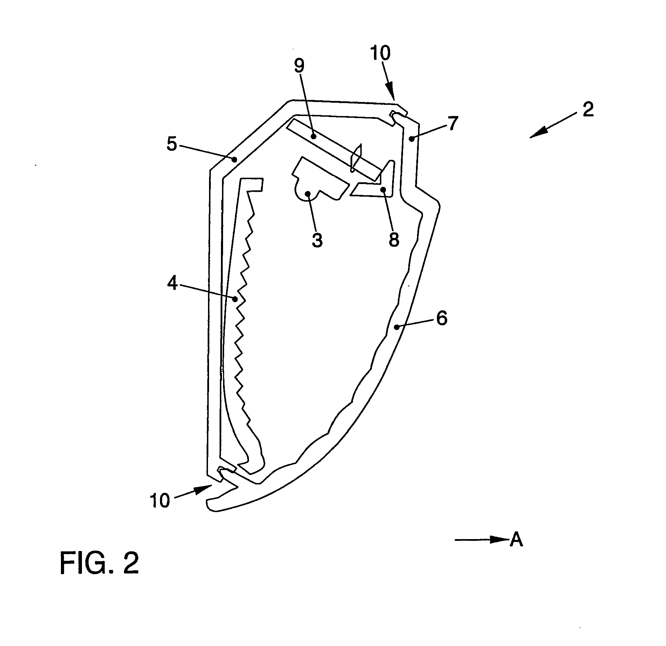

Die direkte Sicht auf die lichtemittierenden Dioden 3 kann durch die Innenblende 8, durch Gehäuseteile der Signalleuchte 2 oder durch äußere Gehäuseteile, wie z. B. das Spiegelgehäuse verhindert werden. In dem in Figur 2 gezeigten Ausführungsbeispiel ist ein Bereich 7 der Lichtscheibe 6, die ein Gehäuseteil der Signalleuchte 2 bildet, hierfür undurchsichtig ausgebildet. Beispielsweise kann der Kunststoff der Lichtscheibe 6 in diesem Bereich 7 undurchsichtig eingefärbt sein. Ferner kann eine Oberfläche dieses Bereiches 7 mit einem Metall, wie z. B. Aluminium bedampft sein.

Das von den Dioden 3 emittierte Licht gelangt durch die Öffnung in der Innenblende 8 direkt zu der Reflektorfläche 4. Es sind insbesondere keine lichtleitenden Elemente oder dgl. zwischen den lichtemittierenden Dioden 3 und dem Reflektor 4 vorgesehen. Es könnte allenfalls eine Zwischenscheibe oder dgl. vorgesehen sein, welche jedoch die Richtung des Strahlengangs im wesentlichen nicht verändert. Das Licht wird an der Reflektorfläche 4 reflektiert und gelangt von dort in Fahrtrichtung A nach vorne durch die Lichtscheibe 6 nach außen.

Die Lichtscheibe 6 kann weitere optische Elemente, wie z. B. eine Walzen- oder Frenelloptik aufweisen, an der das Licht in die gewünschte Abstrahlrichtung gebrochen wird. Von außen erscheint die gesamte Reflektorfläche 4 als homogen ausgeleuchtetes Lichtfeld.

Im gezeigten Ausführungsbeispiel ist die Signalleuchte ein Fahrtrichtungsanzeiger, d.h. eine Blinkleuchte. Die Lichtemission nach außen erfolgt daher in oranger Farbe. Hierfür können entweder die lichtemittierenden Dioden 3 oranges Licht emittieren, die Reflektorfläche 4 kann orange eingefärbt sein oder die Lichtscheibe 6.

## Patentansprüche

1. Außenrückspiegel (1) für Fahrzeuge mit einem Gehäuse, das einen Rückspiegel und eine Signalleuchte (2) aufnimmt, wobei die Signalleuchte (2) eine oder mehrere Lichtquellen (3) und zumindest eine Reflektorfläche (4) aufweist, wobei die Lichtquelle(n) (3) in dem Gehäuse so angeordnet ist/sind, dass sie im wesentlichen von außen nicht direkt sichtbar ist/sind, sondern nur über die Reflektorfläche (4), und die Lichtquelle(n) zur Reflektorfläche so angeordnet ist/sind, dass das von der/den Lichtquelle(n) (3) emittierte Licht auf die Reflektorfläche (4) trifft,
**dadurch gekennzeichnet, dass** die Reflektorfläche (4) in einer Innenblende (8) ausgebildet ist und dass die Innenblende eine Aussparung zum Durchtritt des von der/den Lichtquelle(n) (3) emittierten Lichts aufweist.

2. Außenrückspiegel (1) nach Anspruch 1, **dadurch gekennzeichnet, dass** die Signalleuchte Licht bezüglich der Fahrtrichtung (A) nach vorne ausstrahlt.

3. Außenrückspiegel (1) nach Anspruch 1 oder 2, **dadurch gekennzeichnet, dass** sich die Bauraumtiefe des Gehäuses zumindest zum unteren Randbereich hin verjüngt und dass die Signalleuchte (2) im unteren Randbereich des Gehäuses untergebracht ist, wobei die Lichtquelle(n) (3) oben in der Signalleuchte (2) angeordnet ist/ sind und dort gegenüber direkter Sicht von außen von inneren oder äußeren Gehäuseteilen (7) oder einer Innenblende (8) verdeckt ist/sind.

4. Außenrückspiegel (1) nach einem der vorstehenden Ansprüche, **dadurch gekennzeichnet, dass** die Reflektorfläche (4) sägezahnförmig ausgebildet ist.

5. Außenrückspiegel (1) nach einem der vorstehenden Ansprüche, **dadurch gekennzeichnet, dass** die Lichtquelle(n) eine oder mehrere lichtemittierende Dioden ist/sind.

6. Außenrückspiegel (1) nach Anspruch 5, **dadurch gekennzeichnet, dass** die lichtemittierenden Dioden in Reihe angeordnet sind.

7. Außenrückspiegel (1) nach einem der vorstehenden Ansprüche, **dadurch gekennzeichnet, dass** die Signalleuchte (2) ein Fahrtrichtungsanzeiger ist.

## Claims

1. External rear-view mirror (1) for a vehicle, having a housing which accommodates a rear-view mirror and a signalling light (2), the signalling light (2) comprising one or more light sources (3) and at least one reflector surface (4), the light source(s) (3) being arranged in the housing so that they are essentially visible not directly from the outside but only via the reflector surface (4), and the light source(s) being arranged with respect to the reflector surface so that the light emitted by the light source(s) (3) strikes the reflector surface (4), **characterized in that** the reflector surface (4) is designed in an inner mask (8) and **in that** the inner mask has a recess for passage of the light emitted by the light source(s) (3).

2. External rear-view mirror (1) according to Claim 1, **characterized in that** the signalling light emits light forwards with respect to the driving direction (A).

3. External rear-view mirror (1) according to Claim 1 or 2, **characterized in that** the overall depth of the housing tapers at least towards the lower edge region and **in that** the signalling light (2) is fitted in the lower edge region of the housing, the light source(s) (3) being arranged above in the signalling light (2) and being concealed there from direct external view by inner or outer housing parts (7) or an inner mask (8).

4. External rear-view mirror (1) according to one of the preceding claims, **characterized in that** the reflector surface (4) is designed with a saw-toothed shape.

5. External rear-view mirror (1) according to one of the preceding claims, **characterized in that** the light source(s) is/are one or more light-emitting diodes.

6. External rear-view mirror (1) according to Claim 5, **characterized in that** the light-emitting diodes are arranged in series.

7. External rear-view mirror (1) according to one of the preceding claims, **characterized in that** the signalling light (2) is a driving direction indicator.

## Revendications

1. Rétroviseur extérieur (1) pour véhicules comprenant un boîtier qui accueille un rétroviseur et un témoin lumineux (2), le témoin lumineux (2) présentant une ou plusieurs sources lumineuses (3) et au moins une surface de réflecteur (4), la (les) source(s) lumineuse(s) (3) étant disposée(s) dans le boîtier de telle manière qu'elle(s) ne soi(en)t pas, pour l'essentiel, directement visible(s) de l'extérieur mais uniquement par l'intermédiaire de la surface de réflecteur (4), et la (les) source(s) lumineuse(s) (3) étant disposée(s) par rapport à la surface de réflecteur de telle manière que la lumière émise par la (les) source(s) lumineuse(s) (3) soit incidente sur la surface de réflecteur (4),
**caractérisé en ce que** la surface de réflecteur (4) est formée dans un obturateur intérieur (8) et **en ce que** l'obturateur intérieur présente une encoche pour le passage de la lumière émise par la (les) source(s) lumineuse (s) (3).

2. Rétroviseur extérieur (1) selon la revendication 1, **caractérisé en ce que** le témoin lumineux émet de la lumière vers l'avant par rapport au sens de la marche (A).

3. Rétroviseur extérieur (1) selon la revendication 1 ou 2, **caractérisé en ce que** la profondeur de construction du boîtier diminue au moins en direction de la région marginale inférieure et **en ce que** le témoin lumineux (2) est logé dans la région marginale inférieure du boîtier, la (les) source (s) lumineuse(s) (3) étant disposée (s) au-dessus dans le témoin lumineux (2) et étant recouverte(s) là par des parties intérieures ou extérieures (7) du boîtier ou par un obturateur intérieur (8) pour ne pas être directement visible(s) de l'extérieur.

4. Rétroviseur extérieur (1) selon une des revendications précédentes, **caractérisé en ce que** la surface de réflecteur (4) est configurée en dents de scie.

5. Rétroviseur extérieur (1) selon une des revendications précédentes, **caractérisé en ce que** la (les) source(s) lumineuse(s) est (sont) une ou plusieurs diodes électroluminescentes.

6. Rétroviseur extérieur (1) selon la revendication 5, **caractérisé en ce que** les diodes électroluminescentes sont disposées en série.

7. Rétroviseur extérieur (1) selon une des revendications précédentes, **caractérisé en ce que** le témoin lumineux (2) est un indicateur de direction.
